# EUROPEAN PATENT SPECIFICATION

(11) **EP 0 338 245 B1**
(45) Date of publication and mention of the grant of the patent: **23.11.1994**
(21) Application number: 89104475.2
(22) Date of filing: 18.02.1989
(51) Int. Cl.: G11B 20/02, G11B 5/008, G11B 5/86

(54) **Recorder with analog recording of a digital audio signal**
Aufzeichnungsgerät mit analoger Aufnahme eines digitalen Audio-Signals
Enregistreur avec enregistrement analogue d'un signal audio digital

(30) Priority: 26.02.1988 DE 3806047
(43) Date of publication of application: 25.10.1989
(73) Proprietor: DEUTSCHE THOMSON-BRANDT GMBH, 78048 Villingen-Schwenningen (DE)
(72) Inventor: Ishibashi, Hiroaki, Chiba-City Chiba 280 (JP)

(56) References cited:
- US-A- 4 348 754
- US-A- 4 355 338
- PATENT ABSTRACTS OF JAPAN vol. 10, no. 180 (P-471)(2236) 24 June 1986,& JP-A-61 026908 (KENJI MACHIDA) 6 February 1986,
- PATENT ABSTRACTS OF JAPAN vol. 10, no. 116 (P-452)(2173) 30 April 1986,
- PATENT ABSTRACTS OF JAPAN vol. 8, no. 275 (P-321)(1712) 15 December 1984,& JP-A-59 140632 (SONY K.K.) 13 August 1984,
- Funkschau 18/87, pages 34,35: "Kopierschutz, kastrierte CD?"

## Description

Usual so-called audio compact cassette recorders operate with analog recording of the audio signal. Hereby, the AF audio signal comes, e.g. via an entry hub, from another audio device or a microphone or, in a so-called radio recorder, from the tuner intergrated in the audio recorder.

It is also known fran JP-61-26908 to connect the AF entry of the audio recorder via a cable to an AF audio signal which as such originates from a source of digital audio signal, e.g. a CD player. In this case deterioration of the AF audio signal can occur, caused by the characteristics of the cable, particularly by its resistance, line inductivity and line capacity. For instance, the bandwidth of the audio signal transmitted can be reduced. Hereby the high quality, as such, of the audio signal originating from the digital source is reduced.

It is the object of the invention to create a rerecording facility which causes no or only slight impairment of the quality of the audio signal to be recorded by the audio recorder.

This task is solved by the invention described in claim 1. Advantageous developments of the invention are decribed in the subclaims.

The invention is based on the following idea. If the audio signal primarily originates from a source of a digital audio signal it is of advantage to conduct the transmission up to the recording stage digitally as far and long as possible. The parameters of a cable indicated above have a smaller effect on a digital audio signal than on an analog AF audio signal as long as they do not introduce bit errors into the digital audio signal. For this reason the audio signal is transmitted digitally as far as possible, namely up to the input terminal of the audio recorder, and only inside the audio recorder converted into the analog audio signal necessary for recording by means of a digital-to-analog converter. Preferably, the audio recorder also has an output for a digital audio signal. This output supplies either the digital audio signal fed to the recorder after having been processed accordingly or the audio signal retrieved by reproduction in the recorder, accordingly, after analog-to-digital conversion. The recorder preferably has further inputs and outputs for an analog audio signal, whereby means of switching-over between the processing of a digital signal and an analog signal are provided.

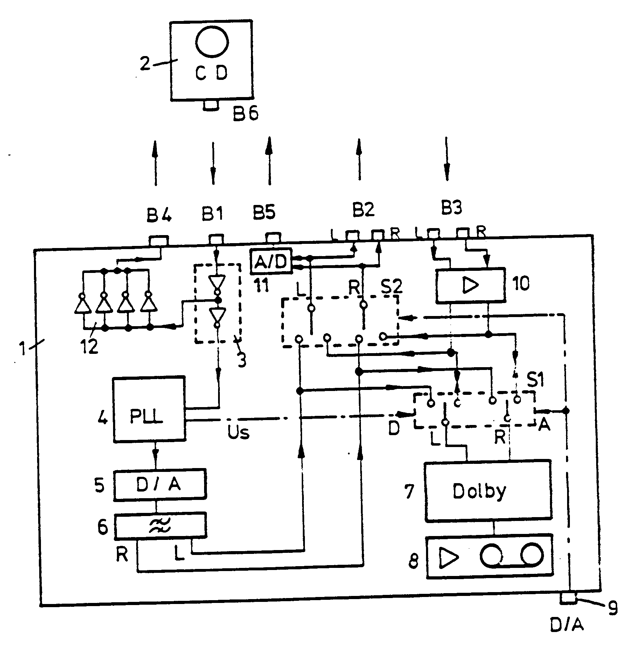

The invention is subsequently illustrated in an example by means of the drawing. The figure shows the block schematic diagram of an analog audio recorder together with a source of a digital audio signal.

The audio recorder 1 with analog recording by means of a usual compact cassette represented in the figure contains on the whole the following hubs for incoming or outgoing analog or digital signals.
B1 Input terminal for a digital audio signal to be recorded by the recorder 1
B2 Output terminal for an analog audio signal coming either from the reproduction route of the recorder or derived from the input digital audio signal
B3 Input terminal for an analog audio signal for the recording or an analog-to-digital conversion
B4 Output terminal for a digital audio signal retrieved from the incoming digital audio signal by processing
B5 Output terminal for a digital audio signal retrieved from the analog reproduction route or from the incoming analog audio signal
B6 Output terminal of a CD player with a digital audio signal.

Several different operating modes of the audio recorder 1 represented in the figure are described below.

### Recording With an Incoming Digital Signal

The CD player 2 at its output terminal B6 supplies a digital audio signal which is fed to the input terminal B1 of the audio recorder 1 via a rerecording cable. The digital audio signal arrives at the PLL demodulator 4 through the memory 3. The output signal of the demodulator 4 is fed to the digital-to-analog converter 5 which, via a low pass 6, generates the two analog audio signals L, R of a stereo audio signal. These signals through the change-over switch S1, which is in its left position, arrive at the AF preemphasis circuit 7 which preferably generates a signal preemphasis according to the Dolby or Highcom method. From here the processed AF audio signals L, R are fed to the analog recording unit 8 as such which comprises a recording amplifier and the recording heads for the audio tape. The change-over switch S1 is switched to the left position by the manually operated control button 9.

### Recording of an Analog Signal

The analog AF audio signal is fed to the input terminal B3 and arrives at the circuit 7 via the amplifier 10 and the change-over switch S1 switched to its right position and is then fed to the recording unit 8.

### Reproduction with Analog Signal Output

The AF audio signals, coming from the unit 8 via the circuit 7 and the change-over switch S1 being in its right position and the change-over switch S2 being in its right position, arrive at the output terminal B2 and can there be retrieved as analog AF audio signals L, R.

### Reproduction with Digital Audio Signal Output

The AF audio signals L, R from the change-over switch S1 are fed to the analog-to-digital converter 11 and converted into a digital audio signal therein. This is present at the output terminal B5 and can be fed to e.g. a recording or reproduction device with digital signal processing.

### Switching-Over Between Analog and Digital Operation

The switching-over, as described, between digital operation and analog operation by means of the change-over switches S1 and S2 can, instead of by the control button 9, also be conducted automatically. For this purpose on presence of a digital signal in the demodulator 4 a correcting variable Us is generated which operates the change-over switch S1 and other change-over switches if necessary. A manual switching-over by means of the button 9 is then no longer required.

### Operation as Digital-To-Analog Converter

If a digital audio signal is fed to the input terminal B1 this can, instead of the recording or in addition to the recording, be fed to the output terminal B2 for an analog audio signal by means of the switch S2, e.g. for the reproduction or recording with an analog audio signal. This way the recorder 1 additionally serves as a digital-to-analog converter.

### Operation as Analog-To-Digital Converter

If an analog audio signal is fed to the input terminal B3 this arrives, via the amplifier 10 and the change-over switch S2 being switched to the right position, at the inputs of the analog-to-digital converter 11, which supplies a corresponding digital audio signal at the output terminal B5, e.g. for a DAT recorder or another device with digital audio signal processing. This way the audio recorder 1 serves as an analog-to-digital converter for an audio signal independent of the recording.

### Processing of the Digital Audio Signal

The digital audio signal fed in via the input terminal B1 arrives at the processing circuit 12. Therein the digital signal is processed. For example, the clock pulse or the signal are generated anew, bit errors are recognized and removed or time errors are compensated. This signal is present at the output terminal B4 as a processed signal. Particularly, the signal at the output terminal B4 is processed with respect to amplitude in such a way that the hub B4 can also be connected to a device with digital signal processing, e.g. another DAT recorder, a receiver or an active loud-speaker unit, located farther away, by means of a longer cable of e.g. 5 to 10 meters.

## Claims

1. Audio recorder with analog recording of an audio signal and with input terminals for audio signals to be recorded, **characterized** **in** **that** the recorder (1) is equipped with an input terminal (B1) for a digital audio signal and a digital-to-analog converter (5) connected thereto.

2. Recorder according to claim 1, **characterized** **in** **that** a change-over switch (S1) is used by which the analog route of recording (7, 8) can be switched to the output of the digital-to-analog converter (5) and to an entry hub (B3) for an analog AF audio signal as desired.

3. Recorder according to claim 1, **characterized** **in** **that** a change-over switch (S2) is used by which the analog output signal of the digital-to-analog converter (5) can be switched to an output terminal (B2) for an analog AF audio signal.

4. Recorder according to claim 2 or 3, **characterized** **in** **that** the change-over switch (S1, S2) is operated automatically by an identification signal derived from the signal which denotes the presence of a digital signal.

5. Recording according to claim 1, **characterized** **in** **that** a PLL demodulator (4) lies between the input terminal (B1) for the digital audio signal and the digital-to-analog converter (5).

6. Recorder according to claim 1, **characterized** **in** **that** an output terminal (B4) for a digital audio signal is used to which the input terminal (B1) for the digital audio signal is connected via a signal processing circuit (12).

7. Recorder according to claim 1, **characterized** **in** **that** an output terminal (B5) for a digital audio signal is used to which the analog reproduction route or the input terminal (B3) for the analog audio signal is connected via an analog-to-digital converter (11).

## Patentansprüche

1. Audiorecorder mit analoger Aufzeichnung eines Audiosignals und mit Eingangsklemmen für aufzuzeichnende Audiosignale, dadurch gekennzeichnet, daß der Recorder (1) mit einer Eingangsklemme (B1) für ein digitales Audiosignal versehen ist und ein Digital/Analog-Wandler (5) damit verbunden ist.

2. Recorder nach Anspruch 1, dadurch gekennzeichnet, daß ein Wechselschalter (S1) verwendet wird, durch welchen der analoge Aufzeichnungsweg (7, 8) nach Wunsch zu dem Ausgang des Digital/Analog-Wandlers (5) und zu einer Eingangsklemme (B3) für ein analoges AF-Audiosignal umgeschaltet werden kann.

3. Recorder nach Anspruch 1, dadurch gekennzeichnet, daß ein Wechselschalter (S3) verwendet wird, durch welchen das analoge Ausgangssignal des Digital/Analog-Wandlers (5) zu einer Ausgangsklemme (B2) für ein analoges AF-Audiosignal geschaltet werden kann.

4. Recorder nach Anspruch 2 oder 3, dadurch gekennzeichnet, daß der Wechselschalter (S1, S2) automatisch durch ein Kennungssignal betätigt wird, das von dem Signal stammt, welches die Gegenwart eines digitalen Signals anzeigt.

5. Recorder nach Anspruch 1, dadurch gekennzeichnet, daß ein PLL-Demodulator (4) zwischen der Eingangsklemme (B1) für das digitale Audiosignal und dem Digital/Analog-Wandler (5) liegt.

6. Recorder nach Anspruch 1, dadurch gekennzeichnet, daß eine Ausgangsklemme (B4) für ein digitales Audiosignal verwendet wird, an welche die Eingangsklemme (B1) für das digitale Audiosignal über eine Signalverarbeitungsschaltung (12) angeschlossen ist.

7. Recorder nach Anspruch 1, dadurch gekennzeichnet, daß eine Ausgangsklemme (B5) für ein digitales Audiosignal verwendet wird, an welche der analoge Wiedergabeweg oder die Eingangsklemme (B3) für das analoge Audiosignal über einen Analog/Digital-Wandler (11) angeschlossen ist.

## Revendications

1. Appareil enregistreur de son à enregistrement analogique d'un signal acoustique, présentant des terminaux d'entrée pour l'enregistrement de signaux acoustiques, **caractérisé** **en** **ce** **que** l'enregistreur (1) est muni d'un terminal d'entrée (B1) pour un signal acoustique numérique et d'un convertisseur numérique/analogique (5) y étant relié.

2. Appareil enregistreur selon la revendication 1, **caractérisé** **en** **ce** **qu'**on utilise un commutateur de sélection (S1), pour commuter la voie analogique d'enregistrement (7, 8) sur la sortie du convertisseur numérique/analogique (5) et sur un plot d'entrée (B3) pour un signal acoustique analogique de basse fréquence, comme on le désire.

3. Appareil enregistreur selon la revendication 1, **caractérisé en ce qu'**on utilise un commutateur de sélection (S2), pour commuter le signal analogique de sortie du convertisseur numérique/analogique (5) sur un terminal de sortie (B2) pour un signal acoustique analogique de basse fréquence.

4. Appareil enregistreur selon les revendications 2 ou 3, **caractérisé** **en** **ce** **que** le commutateur de sélection (S1, S2) est commandé automatiquement par un signal d'identification dérivé du signal indiquant la présence d'un signal numérique.

5. Appareil enregistreur selon la revendication 1, **caractérisé** **en** **ce** **qu'**un démodulateur à verrouillage de phases PLL (4) est placé entre le terminal d'entrée (B1) pour le signal acoustique numérique et le convertisseur numérique/analogique (5).

6. Appareil enregistreur selon la revendication 1, **caractérisé** **en** **ce** **qu'**on utilise un terminal de sortie (B4) pour un signal acoustique numérique ce terminal étant relié avec le terminal d'entrée (B1) pour le signal acoustique numérique au moyen d'un circuit de traitement de signaux (12).

7. Appareil enregistreur selon la revendication 1, **caractérisé** **en** **ce** **qu'**on utilise un terminal de sortie (B5) pour un signal acoustique numérique, ce terminal étant relié avec la voie analogique de reproduction ou le terminal d'entrée (B3) pour le signal acoustique analogique au moyen d'un convertisseur analogique/numérique (11).
